# EUROPÄISCHE PATENTSCHRIFT

(11) **EP 1 638 802 B1**
(45) Veröffentlichungstag und Bekanntmachung des Hinweises auf die Patenterteilung: **03.09.2008**
(21) Anmeldenummer: 04738812.9
(22) Anmeldetag: 30.06.2004
(51) Int. Cl.: B60N 2/28

(54) **KINDERSITZ**
CHILD SEAT
SIEGE POUR ENFANT

(30) Priorität: 02.07.2003 DE 10329924
(43) Veröffentlichungstag der Anmeldung: 29.03.2006
(73) Patentinhaber: Concord GmbH, 95346 Stadtsteinach (DE)
(72) Erfinder: KÖNIG, Walter, 72525 Münsingen (DE); SCHOBERT, Uwe, 95158 Kirchenlamitz (DE)
(74) Vertreter: Zinsinger, Norbert
(86) Internationale Anmeldenummer: PCT/DE2004/001366
(87) Internationale Veröffentlichungsnummer: WO 2005/002906

(56) Entgegenhaltungen:
- EP-A- 0 326 265
- EP-A- 0 818 346
- EP-A- 0 853 019
- DE-U- 29 510 642
- US-A- 5 468 020
- US-A- 5 678 887

## Beschreibung

Die Erfindung betrifft einen Kindersitz mit einer Sitzschale, die eine Beckengurtführung für einen Fahrzeug-Beckengurt aufweist, und mit einer Rückenlehne, die eine Kopfstütze mit Seitenwangen aufweist, wobei an den Seitenwangen jeweils eine Diagonalgurt-Führung für einen Fahrzeug-Diagonalgurt eines Fahrzeug-Dreipunktgurtes vorgesehen ist, wobei die Diagonalgurt-Führung einen nach vorne offenen, nicht gurtklemmenden Schlitz mit einem Gurthalteabschnitt aufweist.

Ein derartiger Kindersitz ist aus der EP 0 781 685 A1 der Anmelderin bekannt. Bei diesem bekannten Kindersitz kann die Diagonalgurt-Führung umgekehrt spazierstockförmig ausgebildet sein, wobei der Gurthalteabschnitt an der jeweiligen Seitenwange der Kopfstütze nach oben weist und nach vorne hin verschlossen wird, um ein ungewolltes Entfernen des Diagonalgurtes des Fahrzeug-Dreipunktgurtes aus der Diagonalgurt-Führung zu verhindern. Die spazierstockartige Gestaltung der Diagonalgurt-Führung bedingt jedoch ein aufwändiges Einfädeln des Diagonalgurtes in die Diagonalgurt-Führung. An die vorderseitige Schlitzöffnung der Diagonalgurt-Führung schließt ein mindestens annähernd horizontaler Gurteinfädel-Abschnitt an, durch den hindurch der Diagonalgurt eingefädelt und anschließend um ca. 90 Grad geschwenkt werden muss, um den nach oben orientierten Gurthalteabschnitt zu erreichen. Diese Verschwenkung des Diagonalgurtes stellt einen nicht zu vernachlässigenden Handhabungsaufwand dar, der im Extremfall zu einer unsicheren bzw. unzuverlässigen Festlegung des Diagonalgurtes führt.

Aus der gattungsgemäßen DE 295 10 642 U1 ist ein Kindersitz bekannt, der eine höhenverstellbare Kopfstütze mit Seitenwangen aufweist. Jede Seitenwange ist vorderseitig d.h. stirnseitig mit einer Klemmeinrichtung für einen Diagonalgurt versehen. Bei diesem bekannten Kindersitz wird der Diagonalgurt mit Hilfe der Klemmeinrichtung festgeklemmt.

Die US 2001/0011838 A1 offenbart einen Kindersitz mit einer Sitzschale und einer Rückenlehne, an der Seitenwangen zwischen einer ersten und einer zweiten Stellung verstellbar sind. In der ersten Stellung liegen die Seitenwangen am Seitenrand der Rückenlehne eng an und verschließen seitlich aus der Rückenlehne ausmündende Diagonalgurt-Führungsschlitze. In der zweiten Stellung sind die Seitenwangen vom Seitenrand der Rückenlehne beabstandet, so dass es möglich ist, in den jeweiligen Diagonalgurt-Führungsschlitz einen Diagonalgurt einzuführen.

Der Erfindung liegt die Aufgabe zugrunde, einen Kindersitz der eingangs genannte Art zu schaffen, bei dem die jeweilige Diagonalgurt-Führung einfach ausgebildet und der Diagonalgurt in die entsprechende Diagonalgurt-Führung einfach einfädelbar ist, wobei der Diagonalgurt in der Diagonalgurt-Führung nach dem Einfädeln sicher und zuverlässig festgehalten wird.

Diese Aufgabe wird bei einem Kindersitz der eingangs genannten Art erfindungsgemäß dadurch gelöst, dass die Diagonalgurt-Führungen am Unterrand der beiden Seitenwangen der Kopfstütze vorgesehen sind, dass der Gurthalteabschnitt direkt an die vorderseitige Schlitzöffnung des Schlitzes der jeweiligen Diagonalgurt-Führung anschließt, und dass an der vorderseitigen Schlitzöffnung ein federndes Verschlusselement vorgesehen ist, das ein einfaches Einfädeln des Fahrzeug-Diagonalgurtes durch die Schlitzöffnung in den Schlitz ermöglicht, das in seiner normalen Verschlussstellung federnd vorgespannt die Schlitzöffnung versperrt, und das einstückig mit einer Betätigungstaste ausgebildet ist, die an der Außenseite der entsprechenden Seitenwange, für ein im Kindersitz befindliches Kind unerreichbar, vorgesehen ist.

Dadurch, dass erfindungsgemäß am Unterrand jeder der beiden Seitenwangen der Kopfstütze jeweils eine Diagonalgurt-Führung vorgesehen ist, ist es möglich, den Kindersitz sowohl an der rechten Seite als auch an der linken Seite eines Fahrzeuges mit Hilfe des zugehörigen fahrzeugeigenen Dreipunktgurtes zuverlässig festzulegen, wobei nicht nur der Kindersitz sondern gleichzeitig auch das im Kindersitz befindliche Kind mit Hilfe des Fahrzeug-Dreipunktgurtes festgehalten wird.

Beim Einfädeln des Fahrzeug-Diagonalgurtes in den Schlitz wird das federnde Verschlusselement mit Hilfe des Fahrzeug-Diagonalgurtes verstellt und die vorderseitige Schlitzöffnung freigegeben. Dabei wird die mechanische Spannung des federnden Verschlusselementes erhöht. Sobald sich der Fahrzeug-Diagonalgurt im Schlitz das heißt im Gurthalteabschnitt befindet, wird das Verschlusselement vom Fahrzeug-Diagonalgurt freigegeben, so dass sich das federnde Verschlusselement entsprechend mechanisch entspannt und automatisch in die Sperrstellung zurückstellt, in der die Schlitzöffnung des Schlitzes dann versperrt wird, so dass der Fahrzeug-Diagonalgurt daran gehindert wird, sich ungewollt aus dem Schlitz zu entfernen.

Um eine optimale Handhabbarkeit des erfindungsgemäßen Kindersitzes zu erreichen, ist es zweckmäßig, wenn die Diagonalgurt-Führungen mit einer glatten Oberfläche ausgebildet sind.

Zweckmäßig ist es, wenn die jeweilige Diagonalgurt-Führung am einen Rand des Schlitzes eine Aussparung aufweist, in der das federnde Verschlusselement in der Verschlussstellung definiert anliegt. Dabei kann das Verschlusselement als Klappe ausgebildet sein, die um eine in der Nachbarschaft des anderen Randes des Schlitzes vorgesehene Achse zwischen der normalen Verschlussstellung und einer Gurt-Einfädelstellung verstellbar ist. Dabei ist das Verschlusselement bereits in der normalen Verschlussstellung an der besagten Achse mechanisch definiert vorgespannt angeordnet. In der Gurt-Einfädelstellung ist die mechanische Spannung des Verschlusselementes dann entsprechend erhöht.

Erfindungsgemäß ist das Verschlusselement einstückig mit einer Betätigungstaste ausgebildet, mit deren Hilfe es möglich ist, das Verschlusselement von der normalen Verschlussstellung in eine der Gurt-Einfädelstellung entsprechende Gurt-Ausfädelstellung zu verstellen, um den Fahrzeug-Diagonalgurt im Bedarfsfall einfach aus dem Schlitz der Diagonalgurt-Führung entfernen zu können. Zu diesem Zwecke ist erfindungsgemäß die Betätigungstaste an der Außenseite der entsprechenden Seitenwange, für ein im Kindersitz befindliches Kind unerreichbar, vorgesehen, so dass das im Kindersitz befindliche Kind nicht ungewollt das Verschlusselement in die Gurt-Ausfädelstellung verstellen kann.

Bei dem erfindungsgemäßen Kindersitz kann die Kopfstütze mit der Rückenlehne einteilig ausgebildet sein. Desgleichen ist möglich, dass die Kopfstütze an der Rückenlehne höhenverstellbar vorgesehen ist. Ein Kindersitz der zuletzt genannten Art weist den besonderen Vorteil auf, dass er für Kinder verschiedener Größen gut geeignet ist, so dass Anschaffungskosten für Kindersitze für Kinder unterschiedlicher Größen eingespart werden können.

Weitere Einzelheiten, Merkmale und Vorteile ergeben sich aus der nachfolgenden Beschreibung eines in der Zeichnung dargestellten Ausführungsbeispieles der erfindungsgemäßen Kindersitzes bzw. wesentlicher Einzelheiten desselben.

Es zeigen:
- Figur 1: eine perspektivische Ansicht des Kindersitzes,
- Figur 2: eine Seitenansicht des Kindersitzes gemäß Figur 1
- Figur 3: abschnittweise eine Seitenansicht des Kindersitzes gemäß den Figuren 1 und 2, wobei insbesondere eine Diagonalgurt-Führung sowie das Verschlusselement in der normalen Verschlussstellung dargestellt sind, und
- Figur 4: eine der Figur 3 ähnliche Darstellung, wobei das Verschlusselement in der Gurt-Einfädel- bzw. -Ausfädelstellung dargestellt ist.

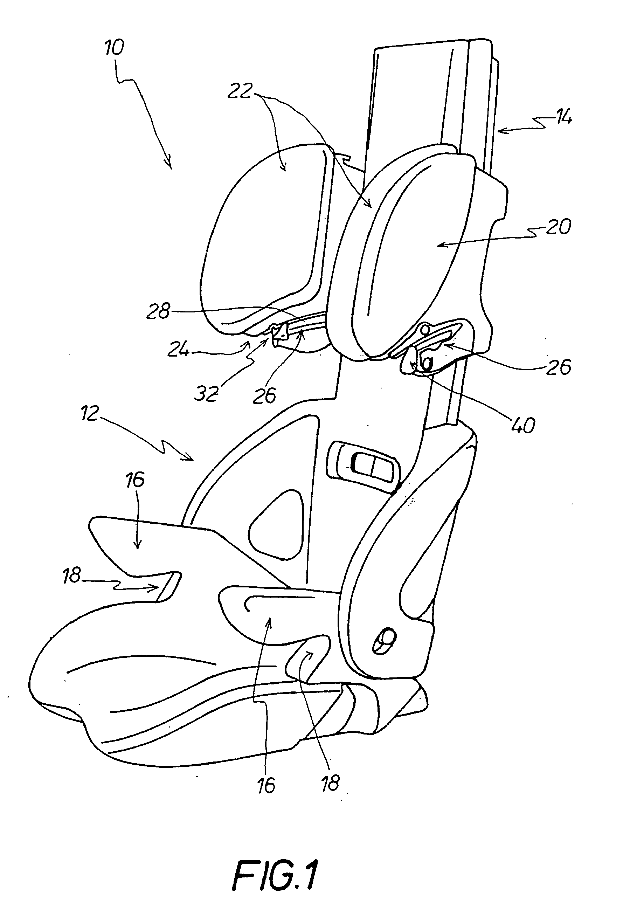

Figur 1 zeigt eine Ausbildung des Kindersitzes 10 mit einer Sitzschale 12 und mit einer von der Sitzschale 12 nach oben stehenden Rückenlehne 14. Die Sitzschale 12 weist Armlehnen 16 und unter den Armlehnen 16 jeweils eine Beckengurtführung 18 für einen Fahrzeugbeckengurt eines Fahrzeug-Dreipunktgurtes auf.

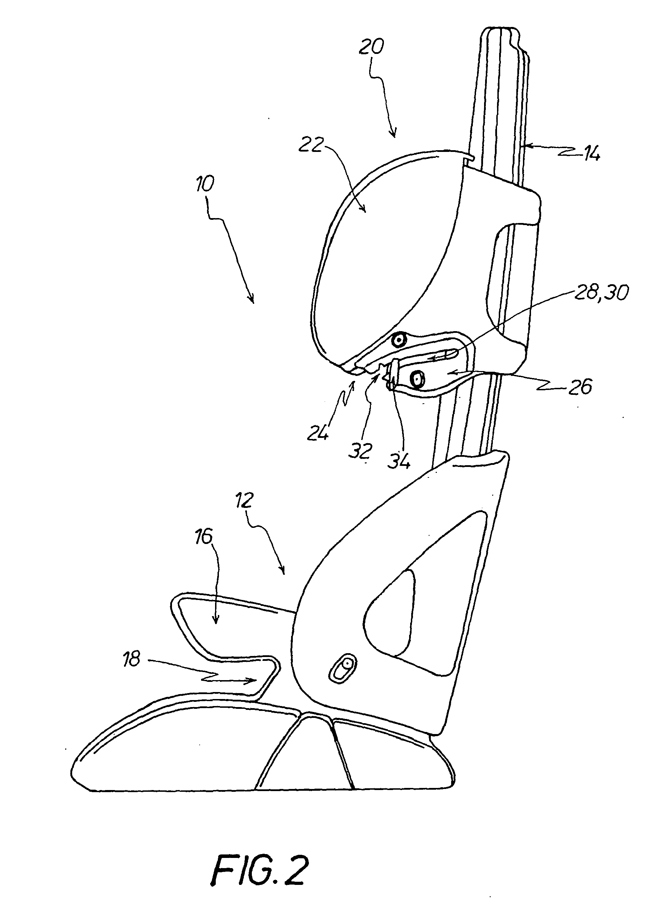

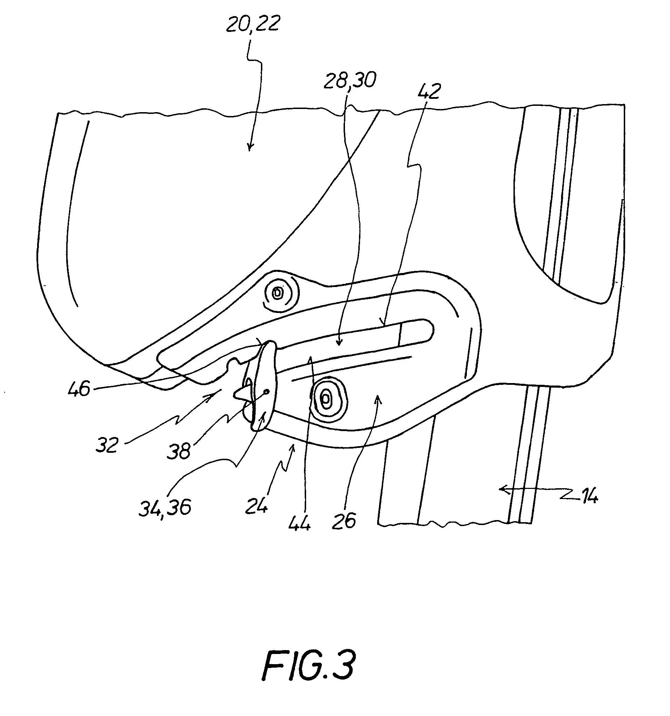

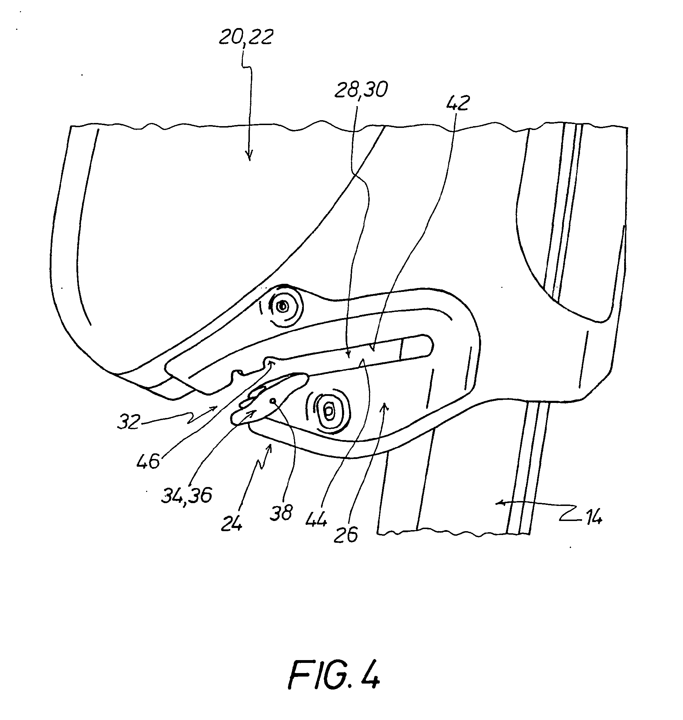

An der Rückenlehne 14 ist eine Kopfstütze 20 höhenverstellbar vorgesehen, die zwei Seitenwangen 22 aufweist. Jede Seitenwange 22 weist einen Unterrand 24 auf, an dem eine Diagonalgurt-Führung 26 für einen Fahrzeug-Diagonalgurt des Fahrzeug-Dreipunktgurtes vorgesehen ist. Wie auch aus den Figuren 2, 3 und 4 ersichtlich ist, weist die jeweilige Diagonalgurt-Führung 26 einen nach vorne offenen, nicht gurtklemmenden Schlitz 28 auf, der einen Gurthalteabschnitt 30 für den Fahrzeug-Diagonalgurt bildet. Der jeweilige Schlitz 28 weist eine vorderseitige Schlitzöffnung 32 auf, an der ein federndes Verschlusselement 34 vorgesehen ist. Das jeweilige Verschlusselement 34 ist als Klappe 36 ausgebildet, die um eine Achse 38 zwischen einer normalen Verschlussstellung, wie sie in Figur 3 dargestellt ist, und einer Gurt-Einfädel- und Gurt-Ausfädelstellung verstellbar ist, wie sie in Figur 4 dargestellt ist.

Das jeweilige Verschlusselement 34 ist einstückig mit einer Betätigungstaste 40 ausgebildet, die an der Außenseite der entsprechenden Seitenwange 22 - für ein im Kindersitz 10 befindliches Kind unerreichbar-vorgesehen ist.

Die als Schlitz 28 ausgebildete Diagonalgurt-Führung 26 ist durch zwei Ränder 42 und 44 begrenzt. Der Rand 42 ist mit einer Aussparung 46 (siehe insbesondere Figur 4) ausgebildet, in der das federnde Verschlusselement 34 in der normalen Verschlussstellung (siehe Figur 3) definiert anliegt. Die Achse 38, um die das federnde Verschlusselement 34 zwischen der normalen Verschlussstellung und der Gurteinfädel- und Gurtausfädelstellung verstellbar ist, ist in der Nachbarschaft des anderen Randes 44 der als Schlitz 28 ausgebildeten Diagonalgurt-Führung 26 vorgesehen.

Beim Einfädeln eines Fahrzeug-Diagonalgurtes durch die vorderseitige Schlitzöffnung 32 in den Schlitz 28 hinein, wird das als Klappe 36 ausgebildete federnde Verschlusselement 34 direkt und unmittelbar im Uhrzeigersinn verschwenkt, wobei die Vorspannung des federnden Verschlusselementes 34 entsprechend vergrößert wird. Sobald der Fahrzeug-Diagonalgurt sich im Schlitz 28 befindet, kann sich das (nicht dargestellte) Federelement des federnden Verschlusselementes 34 wieder entspannen, wodurch das Verschlusselement 34 in die in Figur 3 gezeichnete Verschlussstellung zurückkehrt, in der der Fahrzeug-Diagonalgurt zuverlässig daran gehindert wird, sich aus der Diagonalgurt-Führung 26 zu entfernen. Zum wunschgemäßen Ausfädeln des Fahrzeug-Diagonalgurtes aus der Diagonalgurt-Führung 26 wird die Betätigungstaste 40 des federnden Verschlusselementes 34 betätigt, um das Verschlusselement von der normalen Verschlussstellung in die in Figur 4 gezeichnete Gurt-Ausfädelstellung zu verstellen, wonach der Diagonalgurt aus dem Schlitz 28 entfernt werden kann.

Gleiche Einzelheiten sind in den Figuren 1 bis 4 jeweils mit denselben Bezugsziffern bezeichnet, so dass es sich erübrigt, in Verbindung mit allen Figuren allen Einzelheiten jeweils detailliert zu beschreiben.

## Patentansprüche

1. Kindersitz mit einer Sitzschale (12), die eine Beckengurtführung (18) für einen Fahrzeug-Beckengurt aufweist, und mit einer Rückenlehne (14), die eine Kopfstütze (20) mit Seitenwangen (22) aufweist, wobei an den Seitenwangen (22) jeweils eine Diagonalgurt-Führung (26) für einen Fahrzeug-Diagonalgurt eines Fahrzeug-Dreipunktgurtes vorgesehen ist, wobei die Diagonalgurt-Führung (26) einen nach vorne offenen, nicht gurtklemmenden Schlitz (28) mit einem Gurthalteabschnitt (30) aufweist,
**dadurch gekennzeichnet,**
**dass** die Diagonalgurt-Führungen (26) am Unterrand (24) der beiden Seitenwangen (22) der Kopfstütze (20) vorgesehen sind,
**dass** der Gurthalteabschnitt (30) direkt an die vorderseitige Schlitzöffnung (32) des Schlitzes (28) der jeweiligen Diagonalgurt-Führung (26) anschließt, und
**dass** an der vorderseitigen Schlitzöffnung (32) ein federndes Verschlusselement (34) vorgesehen ist, das ein einfaches Einfädeln des Fahrzeug-Diagonalgurtes durch die Schlitzöffnung (32) in den Schlitz (28) ermöglicht, das in seiner normalen Verschlussstellung federnd vorgespannt die Schlitzöffnung (32) versperrt, und das einstückig mit einer Betätigungstaste (40) ausgebildet ist, die an der Außenseite der entsprechenden Seitenwange (22), für ein im Kindersitz (10) befindliches Kind unerreichbar, vorgesehen ist.

2. Kindersitz nach Anspruch 1,
**dadurch gekennzeichnet,**
**dass** die Diagonalgurt-Führungen (26) mit einer glatten Oberfläche ausgebildet sind.

3. Kindersitz nach Anspruch 1 oder 2,
**dadurch gekennzeichnet,**
**dass** die jeweilige Diagonalgurt-Führung (26) an einem Rand (42) eine Aussparung (46) aufweist, in der das federnde Verschlusselement (34) in der normalen Verschlussstellung definiert anliegt.

4. Kindersitz nach einem der Ansprüche 1 bis 3,
**dadurch gekennzeichnet,**
**dass** das Verschlusselement (34) als Klappe (36) ausgebildet ist, die um eine in der Nachbarschaft des anderen Randes (44) des Schlitzes (28) vorgesehene Achse (38) zwischen der normalen Verschlussstellung und einer Gurteinfädelstellung bzw. Gurtausfädelstellung verstellbar ist.

5. Kindersitz nach einem der Ansprüche 1 bis 4,
**dadurch gekennzeichnet,**
**dass** die Kopfstütze (20) mit der Rückenlehne (14) einteilig ausgebildet ist.

6. Kindersitz nach einem der Ansprüche 1 bis 4,
**dadurch gekennzeichnet,**
**dass** die Kopfstütze (20) an der Rückenlehne (14) höhenverstellbar vorgesehen ist.

## Claims

1. Child seat with a seat shell (12) which has a lap-belt guide (18) for a vehicle lap belt, and with a backrest (14) which has a head restraint (20) with lateral flanks (22), a respective diagonal-belt guide (26) for a vehicle diagonal belt of a vehicle three-point belt being provided on the lateral flanks (22), the diagonal-belt guide (26) having a slot (28) which is open to the front, does not clamp the belt and has a belt-retaining section (30), **characterized in that** the diagonal-belt guides (26) are provided on the lower edge (24) of the two lateral flanks (22) of the head restraint (20),
**in that** the belt-retaining section (30) directly adjoins the front-side slot opening (32) of the slot (28) of the respective diagonal-belt guide (26), and
**in that** a spring-loaded closure element (34) is provided on the front-side slot opening (32), the closure element enabling the vehicle diagonal belt to be threaded in a simple manner through the slot opening (32) into the slot (28), blocking the slot opening (32) in its normal closure position in a spring-loaded, prestressed manner, and being formed integrally with an actuating button (40) which is provided on the outer side of the corresponding lateral flank (22), in a manner which is unreachable by a child in the child seat (10).

2. Child seat according to Claim 1, **characterized in that** the diagonal-belt guides (26) are designed with a smooth surface.

3. Child seat according to Claim 1 or 2, **characterized in that** the respective diagonal-belt guide (26) on one edge (42) has a cutout (46) in which the spring-loaded closure element (34) rests in a defined manner in the normal closure position.

4. Child seat according to one of Claims 1 to 3, **characterized in that** the closure element (34) is designed as a flap (36) which can be displaced about a spindle (38), which is provided in the vicinity of the other edge (44) of the slot (28), between the normal closure position and a belt-threading-in position or belt-removing position.

5. Child seat according to one of Claims 1 to 4, **characterized in that** the head restraint (20) is formed as a single part with the backrest (14).

6. Child seat according to one of Claims 1 to 4, **characterized in that** the head restraint (20) is provided in a height-adjustable manner on the backrest (14).

## Revendications

1. Siège pour enfants comprenant une coque de siège (12), qui présente une glissière pour ceinture ventrale (18) pour une ceinture ventrale de véhicule, ainsi qu'un dossier (14), qui présente un appui-tête (20) ayant des faces latérales (22), une glissière pour ceinture diagonale (26) étant respectivement prévue au niveau des faces latérales (22) pour une ceinture diagonale de véhicule d'une ceinture à trois points de véhicule, la glissière pour ceinture diagonale (26) présentant une rainure ouverte vers l'avant, ne bloquant pas la ceinture (28) ayant une partie de maintien de la ceinture (30),
**Caractérisé en ce**
**que** les glissières pour ceinture diagonale (26) sont prévues au niveau du bord inférieur (24) des deux faces latérales (22) de l'appui-tête (20),
en ce que la partie de maintien de la ceinture (30) est directement attachée à l'ouverture de rainure (32) sur le devant de la rainure (28) de la glissière pour ceinture diagonale (26) respective, et
en ce qu'un élément de verrouillage à ressort (34) est prévu au niveau de l'ouverture de rainure (32) sur le devant, lequel élément permet l'insertion simple de la ceinture diagonale de véhicule à travers l'ouverture de rainure (32) dans la rainure (28), qui bloque l'ouverture de rainure (32) dans sa position de verrouillage normale s'étendant vers l'avant grâce au ressort, et qui est réalisé d'un seul tenant avec un bouton d'actionnement (40), qui est prévu au niveau d'un côté extérieur de la face latérale (22) correspondante, pour être inaccessible pour un enfant se trouvant dans le siège pour enfants (10).

2. Siège pour enfants selon la revendication 1,
**Caractérisé en ce**
**que** les glissières pour ceinture diagonale (26) sont réalisées à partir d'une surface lisse.

3. Siège pour enfants selon la revendication 1 ou 2,
**caractérisé en ce**
**que** la glissière pour ceinture diagonale (26) respective présente, au niveau d'un bord (42), un évidement (46), dans lequel l'élément de verrouillage à ressort (34) est ajusté de manière définie dans la position de verrouillage normale.

4. Siège pour enfants selon l'une quelconque des revendications 1 à 3,
**caractérisé en ce**
**que** l'élément de verrouillage (34) est réalisé comme un rabat (36), qui est réglable autour d'un axe prévu (38) à proximité de l'autre bord (44) de la rainure (28) entre la position de verrouillage normale et une position d'insertion de ceinture et/ou une position de retrait de ceinture.

5. Siège pour enfants selon l'une quelconque des revendications 1 à 4,
**caractérisé en ce**
**que** l'appui-tête (20) est réalisé d'une seule pièce avec le dossier (14).

6. Siège pour enfants selon l'une quelconque des revendications 1 à 4,
**caractérisé en ce**
**que** l'appui-tête (20) est prévu pour être réglable en hauteur au niveau du dossier (14).
